# EUROPEAN PATENT APPLICATION

(11) **EP 4 574 523 A1**
(43) Date of publication of application: **25.06.2025**
(21) Application number: 24219041.1
(22) Date of filing: 11.12.2024
(51) Int. Cl.: B60L 3/00, B60L 3/12, B60L 53/10, B60L 53/12, B60L 53/14, B60L 53/30, B60L 53/62, B60L 53/66, B60L 53/68, B60L 58/12, B60L 58/16, B60L 58/24, H02J 7/00, G06N 20/00, B60K 1/04, B60L 50/60, B60L 53/16

(54) **SMART CHARGING TO AVOID BATTERY DAMAGE**

(30) Priority: 12.12.2023 US 202318536702
(71) Applicant: Volvo Car Corporation, 405 31 Göteborg (SE)
(72) Inventor: EK BLOHM, Kristina, 40531 Göteborg (SE); LE SAUX, Matthias, 40531 Göteborg (SE); CARLSSON, Jonas, 40531 Göteborg (SE); TÖRMÄNEN, Mikael, 40531 Göteborg (SE)
(74) Representative: Maiwald GmbH

(57) **Abstract**

Smart charging to avoid battery damage (e.g., using a computerized tool) is enabled. For example, a vehicle can comprise a memory that stores computer executable components, and a processor that executes the computer executable components stored in the memory, wherein the computer executable components comprise a charging scheme component that, based on one or more health metrics of a battery of the vehicle, determines a charging scheme for charging the battery, and a communication component that transmits data representative of the charging scheme to a vehicle charger.

## Description

### TECHNICAL FIELD

The disclosed subject matter relates to battery operated vehicles (e.g., transportation vehicles) and, more particularly, to smart charging to avoid battery damage.

### BACKGROUND

Electric vehicles are becoming increasingly prevalent worldwide, and are poised to become one of the most common modes of transportation. With this pivot in transportation technology, there exist increasing power demands on batteries or battery packs of electric vehicles. Especially during fast charging of electric vehicles, batteries of electric vehicles can become degraded, thus reducing electric vehicle power or range. For example, a user can connect to a charger and allow the charger to charge based on a standard charging scheme which does not consider the amount of fast charging time that the user desires, or the impact on the battery's health based on the amount of fast charging time. Eventually, battery degradation can lead to costly battery repairs or replacement of corresponding electric vehicles.

The above-described background relating to vehicle batteries and systems is merely intended to provide a contextual overview of some current issues and is not intended to be exhaustive. Other contextual information may become further apparent upon review of the following detailed description.

### SUMMARY

The following presents a summary to provide a basic understanding of one or more embodiments of the invention. This summary is not intended to identify key or critical elements, or delineate any scope of the particular embodiments or any scope of the claims. Its sole purpose is to present concepts in a simplified form as a prelude to the more detailed description that is presented later. In one or more embodiments described herein, systems, devices, computer-implemented methods, apparatuses and/or computer program products that facilitate vehicle battery health optimization are described.

As alluded to above, vehicle battery damage avoidance can be improved in various ways, and various embodiments are described herein to this end and/or other ends.

According to an embodiment, a vehicle can comprise a memory that stores computer executable components, and a processor that executes the computer executable components stored in the memory, wherein the computer executable components can comprise a charging scheme component that, based on one or more health metrics of a battery of the vehicle, determines a charging scheme for charging the battery, and a communication component that transmits data representative of the charging scheme to a vehicle charger.

According to another embodiment, a vehicle charger can comprise a memory that stores computer executable components, and a processor that executes the computer executable components stored in the memory, wherein the computer executable components can comprise a communication component that receives one or more health metrics of a battery of a vehicle, and a charging scheme component that, based on the one or more health metrics of the battery, determines a charging scheme for charging the battery of the vehicle.

According to yet another embodiment, a non-transitory machine-readable medium can comprise executable instructions that, when executed by a processor, facilitate performance of operations, comprising based on one or more health metrics of a battery of a vehicle, determining a charging scheme for charging the battery, and transmitting data representative of the charging scheme to a vehicle charger applicable to the vehicle.

### BRIEF DESCRIPTION OF DRAWINGS

FIG. 1 illustrates a block diagram of an exemplary system in accordance with one or more embodiments described herein.
FIG. 2 illustrates a block diagram of example, non-limiting computer executable components in accordance with one or more embodiments described herein.
FIG. 3 illustrates a block diagram of example, non-limiting smart charging in accordance with one or more embodiments described herein.
FIG. 4 illustrates a diagram of an example, non-limiting vehicle interior in accordance with one or more embodiments described herein.
FIG. 5 illustrates a flowchart for a process associated with smart charging in accordance with one or more embodiments described herein.
FIG. 6 illustrates a block flow diagram for a process associated with smart charging in accordance with one or more embodiments described herein.
FIG. 7 illustrates a block flow diagram for a process associated with smart charging in accordance with one or more embodiments described herein.
FIG. 8 is an example, non-limiting computing environment in which one or more embodiments described herein can be implemented.
FIG. 9 is an example, non-limiting networking environment in which one or more embodiments described herein can be implemented.

### DETAILED DESCRIPTION

The following detailed description is merely illustrative and is not intended to limit embodiments and/or application or uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

It will be understood that when an element is referred to as being "coupled" to another element, it can describe one or more different types of coupling including, but not limited to, chemical coupling, communicative coupling, capacitive coupling, electrical coupling, electromagnetic coupling, inductive coupling, operative coupling, conductive coupling, acoustic coupling, ultrasound coupling, optical coupling, physical coupling, thermal coupling, and/or another type of coupling. As referenced herein, an "entity" can comprise a human, a client, a user, a computing device, a software application, an agent, a machine learning model, an artificial intelligence, and/or another entity. It should be appreciated that such an entity can facilitate implementation of the subject disclosure in accordance with one or more embodiments the described herein.

The computer processing systems, computer-implemented methods, apparatus and/or computer program products described herein employ hardware and/or software to solve problems that are highly technical in nature (e.g., determining and/or executing one or more actions determined to optimize vehicle battery health), that are not abstract and cannot be performed as a set of mental acts by a human.

In various embodiments, a smart charging scheme is provided, in which a vehicle charger receives charging input data from a vehicle or a user about the time limit for charging and desired level of charging. In one or more embodiments, the charging input data can be communicated prior to the vehicle connecting to a vehicle charger, or upon wireless or physical connection between the vehicle charger and the vehicle. First, a vehicle charger or charging station can initiate communication with a vehicle herein, for instance, to retrieve current temperature, general health of the battery, number of times the battery has been exposed high level of charging (e.g., the high level of charging can damage the battery, or other suitable battery health metrics. Health of a vehicle battery herein can be degraded, for instance, if the battery is charged at high level with frequency and/or over long period of time, which can be considered in the determination of a charging scheme herein to achieve a desired charging goal (e.g., maximum charge given the time). In this regard, a vehicle or vehicle charger herein can determine a charging pattern (e.g., a charging process that ramps up or down charging level during a defined period of time, similar to wave graph) to use to charge a battery of a vehicle herein. In various embodiments, before the charging pattern is utilized, a charging station or charger can retrieve charging scheme historical data, and determine the corresponding impact it may have had of the health of the battery. Based on a corresponding analysis, the charging scheme can be modified so as not to further degrade or age the battery (e.g., or to minimize such an effect). This modification can be communicated to a vehicle or a user by transmitting message to one or more of the user's devices (e.g., mobile device such as a smartphone, tablet, or computer, infotainment system, etc.) If the input data (e.g., charging scheme historical data) is provided prior to wireless or physical connection between the vehicle and the vehicle charger, the vehicle charger can provide an alert to user indicative of the maximum charge available, for instance, based on input data and additional information retrieved from one or more of electronic control units (ECUs) or storage devices. In various embodiments, the charging pattern can be determined and/or communicated by the vehicle (e.g., one or more of ECU and storage devices) to the vehicle charger or charging station herein.

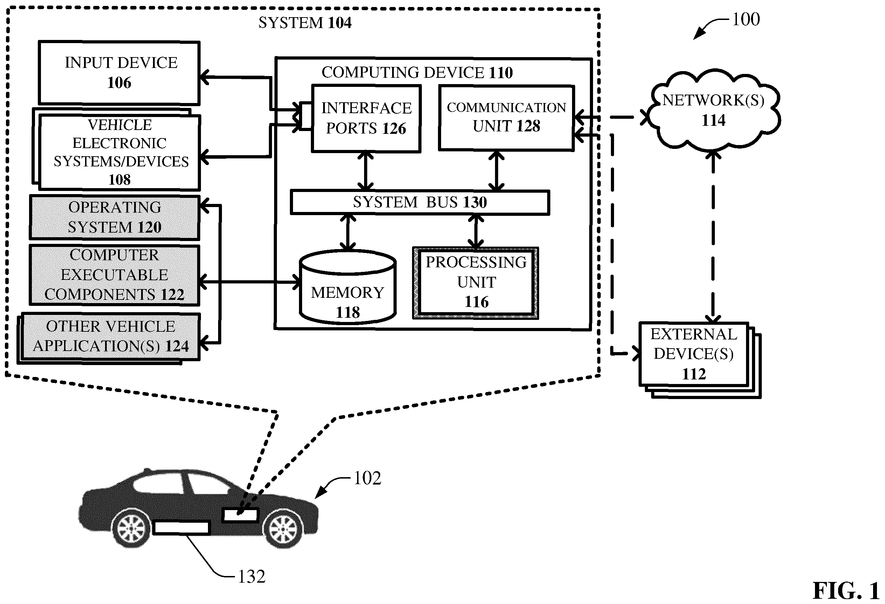

Turning now to FIG. 1, there is illustrated an example, non-limiting system 100 in accordance with one or more embodiments herein. System 100 can comprise a computerized tool, which can be configured to perform various operations relating to smart vehicle battery charging (e.g., to avoid battery damage). In accordance with various exemplary embodiments, system 100 can be deployed on or within a vehicle 102, (e.g., an automobile, as shown in FIG. 1). Although FIG. 1 depicts the vehicle 102 as an automobile, the architecture of the system 100 is not so limited. For instance, the system 100 described herein can be implemented with a variety of types of vehicles 102. Example vehicles 102 that can incorporate the exemplary system 100 can include, but are not limited to: automobiles (e.g., autonomous vehicles), airplanes, trains, motorcycles, carts, trucks, semi-trucks, buses, boats, recreational vehicles, helicopters, jets, electric scooters, electric bicycles, vehicle chargers, vehicle charging stations, a combination thereof, and/or the like. It is additionally noted that the system 100 can be implemented in a variety of types of automobiles, such as battery electric vehicles, hybrid vehicles, plug-in hybrid vehicles, or other suitable types of vehicles. In further embodiments, the system 100 can be implemented in a vehicle charger or charging station described herein.

As shown in FIG. 1, the system 100 can comprise one or more systems 104, which can include one or more input devices 106, one or more other vehicle electronic systems and/or devices 108, and/or one or more computing devices 110. Additionally, the system 100 can comprise one or more external devices 112 that can be communicatively and/or operatively coupled to the one or more computing devices 110 of the one or more systems 104 either via a one or more networks 114 and/or a direct electrical connection (e.g., as shown in FIG. 1). In various embodiments, one or more of the system 104, input devices 106, vehicle electronic systems and/or devices 108, computing devices 110, external devices 112, and/or networks 114 can be communicatively or operably coupled (e.g., over a bus or wireless network) to one another to perform one or more functions of the system 100. It is noted that the system 104 is not limited to implementation in a vehicle. For instance, in various embodiments, a vehicle charger or vehicle charging station can comprise the system 104, which can be communicatively and/or electrically coupled to a vehicle 102.

The one or more input devices 106 can display one or more interactive graphic entity interfaces ("GUIs") that facilitate accessing and/or controlling various functions and/or application of the vehicle 102. The one or more input devices 106 can display one or more interactive GUIs that facilitate accessing and/or controlling various functions and/or applications. The one or more input devices 106 can comprise one or more computerized devices, which can include, but are not limited to: personal computers, desktop computers, laptop computers, cellular telephones (e.g., smartphones or mobile devices), computerized tablets (e.g., comprising a processor), smart watches, keyboards, touchscreens, mice, a combination thereof, and/or the like. An entity or user of the system 100 can utilize the one or more input devices 106 to input data into the system 100. Additionally, the one or more input devices 106 can comprise one or more displays that can present one or more outputs generated by the system 100 to an entity. For example, the one or more displays can include, but are not limited to: cathode tube display ("CRT"), light-emitting diode display ("LED"), electroluminescent display ("ELD"), plasma display panel ("PDP"), liquid crystal display ("LCD"), organic light-emitting diode display ("OLED"), a combination thereof, and/or the like.

For example, the one or more input devices 106 can comprise a touchscreen that can present one or more graphical touch controls that can respectively correspond to a control for a function of the vehicle 102, an application, a function of the application, interactive data, a hyperlink to data, and the like, wherein selection and/or interaction with the graphical touch control via touch activates the corresponding functionality. For instance, one or more GUIs displayed on the one or more input devices 106 can include selectable graphical elements, such as buttons or bars corresponding to a vehicle navigation application, a media application, a phone application, a back-up camera function, a car settings function, a parking assist function, and/or the like. In some implementations, selection of a button or bar corresponding to an application or function can result in the generation of a new window or GUI comprising additional selectable icons or widgets associated with the selected application. For example, selection of one or more selectable options herein can result in generation of a new GLTI or window that includes additional buttons or widgets with one or more selectable options. The type and appearance of the controls can vary. For example, the graphical touch controls can include icons, symbols, widgets, windows, tabs, text, images, a combination thereof, and/or the like.

The one or more input devices 106 can comprise suitable hardware that registers input events in response to touch (e.g., by a finger, stylus, gloved hand, pen, etc.). In some implementations, the one or more input devices 106 can detect the position of an object (e.g., by a finger, stylus, gloved hand, pen, etc.) over the one or more input devices 106 within close proximity (e.g., a few centimeters) to touchscreen without the object touching the screen. As used herein, unless otherwise specified, reference to "on the touchscreen" refers to contact between an object (e.g., an entity's finger) and the one or more input devices 106 while reference to "over the touchscreen" refers to positioning of an object within close proximity to the touchscreen (e.g., a defined distance away from the touchscreen) yet not contacting the touchscreen.

The type of the input devices 106 can vary and can include, but is not limited to: a resistive touchscreen, a surface capacitive touchscreen, a projected capacitive touchscreen, a surface acoustic wave touchscreen, and an infrared touchscreen. In various embodiments, the one or more input devices 106 can be positioned on the dashboard of the vehicle 102, such as on or within the center stack or center console of the dashboard. However, the position of the one or more input devices 106 within the vehicle 102 can vary.

The one or more other vehicle electronic systems and/or devices 108 can include one or more additional devices and/or systems (e.g., in addition to the one or more input devices 106 and/or computing devices 110) of the vehicle 102 that can be controlled based at least in part on commands issued by the one or more computing devices 110 (e.g., via one or more processing units 116) and/or commands issued by the one or more external devices 112 communicatively coupled thereto. For example, the one or more other vehicle electronic systems and/or devices 108 can comprise: a media system (e.g., audio and/or video); a back-up camera system; a heating, ventilation, and air conditioning ("HVAC") system; a lighting system; a cruise control system, a power locking system, a navigation system, an autonomous driving system, a vehicle sensor system, telecommunications system, a combination thereof, and/or the like. Other example other vehicle electronic systems and/or devices 108 can comprise one or more sensors, which can comprise odometers, altimeters, speedometers, accelerometers, engine features and/or components, fuel meters, flow meters, cameras (e.g., digital cameras, heat cameras, infrared cameras, and/or the like), lasers, radar systems, lidar systems, microphones, vibration meters, moisture sensors, thermometers, seatbelt sensors, wheel speed sensors, a combination thereof, and/or the like. For instance, a speedometer of the vehicle 102 can detect the vehicle's 102 traveling speed. Further, the one or more sensors can detect and/or measure one or more conditions outside the vehicle 102, such as: whether the vehicle 102 is traveling through a rainy environment; whether the vehicle 102 is traveling through winter conditions (e.g., snowy and/or icy conditions); whether the vehicle 102 is traveling through very hot conditions (e.g., desert conditions); and/or the like. Example navigational information can include, but is not limited to: the destination of the vehicle 102, the position of the vehicle 102, the type of vehicle 102, the speed of the vehicle 102, environmental conditions surrounding the vehicle 102, the planned route of the vehicle 102, traffic conditions expected to be encountered by the vehicle 102, operational status of the vehicle 102, a combination thereof, and/or the like.

The one or more computing devices 110 can facilitate executing and controlling one or more operations of the vehicle 102, including one or more operations of the one or more input devices 106, and the one or more other vehicle electronic systems/devices 108 using machine-executable instructions. In this regard, embodiments of system 100 and other systems described herein can include one or more machine-executable components embodied within one or more machines (e.g., embodied in one or more computer readable storage media associated with one or more machines, such as computing device 110). Such components, when executed by the one or more machines (e.g., processors, computers, virtual machines, etc.) can cause the one or more machines to perform the operations described.

For example, the one or more computing devices 110 can include or be operatively coupled to at least one memory 118 and/or at least one processing unit 116. The one or more processing units 116 can be any of various available processors. For example, dual microprocessors and other multiprocessor architectures also can be employed as the processing unit 116. In various embodiments, the at least one memory 118 can store software instructions embodied as functions and/or applications that when executed by the at least one processing unit 116, facilitate performance of operations defined by the software instruction. In the embodiment shown, these software instructions can include one or more operating system 120, one or more computer-executable components 122, and/or one or more other vehicle applications 124. For example, the one or more operating systems 120 can act to control and/or allocate resources of the one or more computing devices 110. It is to be appreciated that the claimed subject matter can be implemented with various operating systems or combinations of operating systems.

The one or more computer executable components 122 and/or the one or more other vehicle applications 124 can take advantage of the management of resources by the one or more operating systems 120 through program modules and program data also stored in the one or more memories 118. The one or more computer executable components 122 can provide various features and/or functionalities that can facilitate smart charging (e.g., to avoid battery damage) and corresponding communication herein. Example, other vehicle applications 124 can include, but are not limited to: a navigation application, a media player application, a phone application, a vehicle settings application, a parking assistance application, an emergency roadside assistance application, a combination thereof, and/or the like. The features and functionalities of the one or more computer executable components 122 are discussed in greater detail infra.

The one or more computing devices 110 can further include one or more interface ports 126, one or more communication units 128, and a system bus 130 that can communicatively couple the various features of the one or more computing devices 110 (e.g., the one or more interface ports 126, the one or more communication units 128, the one or more memories 118, and/or the one or more processing units 116). The one or more interface ports 126 can connect the one or more input devices 106 (and other potential devices) and the one or more other vehicle electronic systems/devices 108 to the one or more computing devices 110. For example, the one or more interface ports 126 can include, a serial port, a parallel port, a game port, a universal serial bus ("USB") and the like.

The one or more communication units 128 can include suitable hardware and/or software that can facilitate connecting one or more external devices 112 to the one or more computing devices 110 (e.g., via a wireless connection and/or a wired connection). For example, the one or more communication units 128 can be operatively coupled to the one or more external devices 112 via one or more networks 114. The one or more networks 114 can include wired and/or wireless networks, including but not limited to, a personal area network ("PAN"), a local area network ("LAN"), a cellular network, a wide area network ("WAN", e.g., the Internet), and the like. For example, the one or more external devices 112 can communicate with the one or more computing devices 110 (and vice versa) using virtually any desired wired or wireless technology, including but not limited to: wireless fidelity ("Wi-Fi"), global system for mobile communications ("GSM"), universal mobile telecommunications system ("UMTS"), worldwide interoperability for microwave access ("WiMAX"), enhanced general packet radio service (enhanced "GPRS"), fifth generation ("5G") communication system, sixth generation ("6G") communication system, third generation partnership project ("3GPP") long term evolution ("LTE"), third generation partnership project 2 ("3GPP2") ultra- mobile broadband ("UMB"), high speed packet access ("HSPA"), Zigbee and other 802.XX wireless technologies and/or legacy telecommunication technologies, near field communication ("NFC") technology, BLUETOOTH^{®}, Session Initiation Protocol ("SIP"), ZIGBEE^{®}, RF4CE protocol, WirelessHART protocol, 6LoWPAN (IPv6 over Low power Wireless Area Networks), Z-Wave, an ANT, an ultra-wideband ("UWB") standard protocol, vehicle-to-vehicle (V2V), vehicle-to-everything (V2E), and/or other proprietary and non-proprietary communication protocols. In this regard, the one or more communication units 128 can include software, hardware, or a combination of software and hardware that is configured to facilitate wired and/or wireless communication between the one or more computing devices 110 and the one or more external devices 112. While the one or more communication units 128 are shown for illustrative clarity as a separate unit that is not stored within memory 118, it is to be appreciated that one or more (software) components of the communication unit can be stored in memory 118 and include computer executable components.

The one or more external devices 112 can include any suitable computing device comprising a display and input device (e.g., a touchscreen) that can communicate with the one or more computing devices 110 comprised within the system 104 and interface with the one or more computer executable components 122 (e.g., using a suitable application program interface ("API")). For example, the one or more external devices 112 can include, but are not limited to: a mobile phone, a smartphone, a tablet personal computer ("PC"), a digital assistant ("PDA"), a heads-up display ("HUD"), virtual reality ("VR") headset, an augmented reality ("AR") headset, or another type of wearable computing device, a desktop computer, a laptop computer, a computer tablet, a combination thereof, and the like.

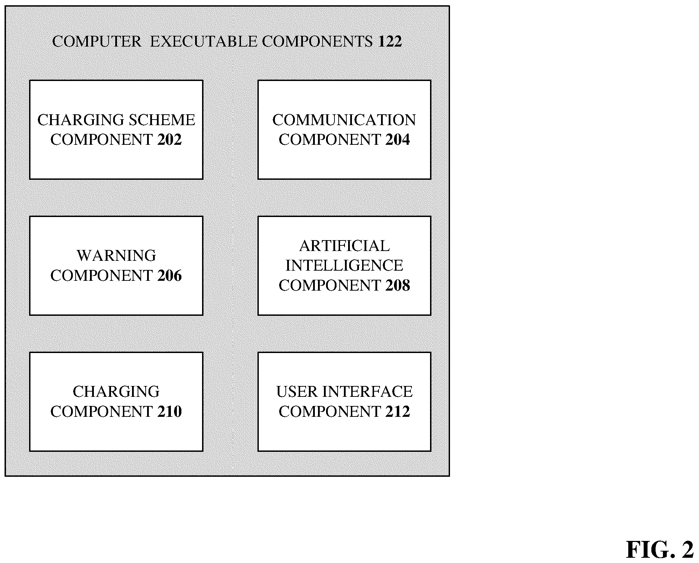

FIG. 2 illustrates a block diagram of example, non-limiting computer executable components 122 that can facilitate smart vehicle battery charging in accordance with one or more embodiments described herein. Repetitive description of like elements employed in other embodiments described herein is omitted for sake of brevity. As shown in FIG. 2, the one or more computer executable components 122 can include charging scheme component 202, communication component 204, warning component 206, artificial intelligence (A.I.) component 208, charging component 210 and/or user interface (U.I.) component 212.

In various embodiments herein, the onboard vehicle system 104 and/or charging scheme component 202 can be configured to determine and/or monitor one or more battery health metrics of a battery 132 of a vehicle 102. In various embodiments, a battery health metric herein can comprise, or be based on, a difference between a previous impedance of the battery 132 and a current impedance of the battery 132. In further embodiments, the battery health metric can comprise, or be based on, a difference between an impedance of one cell of the battery 132 and a second cell of the battery 132 (e.g., of a common battery pack). In further embodiments, the battery health metric can comprise, or be based on, an output of a battery sensor (e.g., a voltage and/or a temperature). In this regard, the vehicle electronic systems/devices 108 can comprise a battery sensor that can be utilized by the charging scheme component 202 to monitor and/or determine one or more battery health metrics represented in the battery health of the battery 132. In various embodiments, the charging scheme component 202 can determine a state of health of the battery 132 (e.g., such a state of age or degradation of the battery cell 132), according to one or more defined health metrics, for instance, based on an output of the battery sensor. It is noted that, in various implementations, the battery 132 can comprise a solid-state battery. In additional implementations, the battery 132 can comprise a solid-state battery pack, made up of one or more electrically coupled solid-state battery sections. In further implementations, the battery 132 can comprise one or more battery cells (e.g., lithium battery cells), thus comprising a single-cell battery 132 or a multi-cell battery 132.

In various embodiments, the charging scheme component 202 can, based on one or more health metrics of the battery 132 of the vehicle 102, determine a charging scheme for charging the battery 132. In some embodiments, the one or more health metrics can comprise a current temperature of the battery 132. In further embodiments, the one or more health metrics can comprise a state of health metric of the battery 132. In further embodiments, the one or more health metrics can comprise a quantity of times that the battery 132 has been exposed to a charging rate that exceeds a defined charging rate threshold. In additional embodiments, the one or more health metrics can comprise a cumulative duration of time that the battery 132 has been exposed to a charging rate that exceeds a defined charging rate threshold. In various embodiments, the charging scheme can comprise a group of charging rates configured (e.g., via the charging scheme component 202) to be selectively utilized during charging of the battery 132 to prevent a temperature of the battery 132 from exceeding a defined temperature threshold. For example, the charging scheme can comprise a first charging rate (e.g., 350 kW) for a first defined amount of time (e.g., 20 minutes), a second charging rate (e.g., 50 kW) for a second defined amount of time (e.g., 15 minutes), and a cooling period (e.g., charging at 5kW) for a third defined amount of time (e.g., 10 minutes). It is noted that such a charging scheme is purely an example, and charging schemes herein comprise any suitable charging rate for any suitable period of time, with any suitable quantity of different charging rates and/or cooling periods.

It is noted that, in various embodiments, the charging scheme for charging the battery can be determined (e.g., via the charging scheme component 202) based on a defined amount of time available to charge the battery 132. For example, a calendar of a user of a vehicle 102 herein can be synchronized (e.g., via the communication component 204 and/or U.I. component 212) with a charging scheme herein (e.g., via the charging scheme component 202). In further embodiments, a user can input (e.g., via the U.I. component 212) an available amount of time to charge. In this regard, the charging scheme component 202 can determine a charging scheme based on the defined available amount of time. If not enough time to charge is available in the determined amount of time, the vehicle 102 can generate a warning (e.g., via the warning component 206). Such a warning can be indicative of insufficient time to charge the battery 132 without degradation, or that the battery 132 could be damaged or degraded by overriding (e.g., via user input) the system's recommended charging scheme. In this regard, the U.I. component 212 can present a message representative of the warning to a user of the vehicle 102. Such a message can comprise a notification and/or one or more options, configured to be selectable by the user, that can be implemented by the system 100 in order to acknowledge the warning, override the warning (e.g., continue charging at a rate that could damage the battery 132), select a charging scheme from a group of available charging schemes, or other suitable selectable options or inputs.

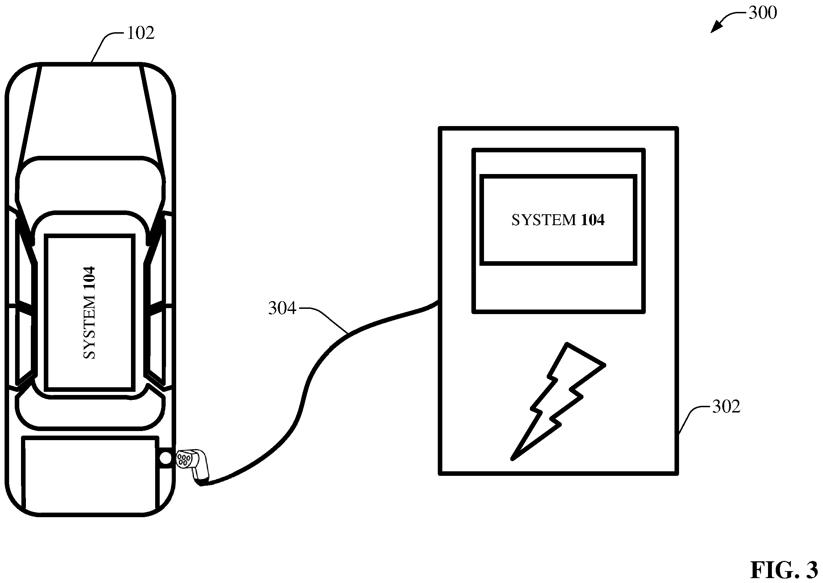

In various embodiments, the communication component 204 can transmit data representative of the charging scheme (e.g., the selected or determined charging scheme to be utilized by the charging component 210 to charge the battery 132) to a vehicle charger 302 (see FIG. 3 which depicts smart charging 300 herein). In this regard, the data can comprise a preferred charging scheme determined via the charging scheme component 202. In some embodiments, the communication component 204 can transmit the data representative of the charging scheme to the vehicle charger 302 via a wireless connection. In further embodiments, the communication component 204 can transmit the data representative of the charging scheme to the vehicle charger 302 via a charging cable 304 connected to the vehicle 102 and to the vehicle charger 302. It is noted that, in various embodiments, the data representative of the charging scheme can be transmitted via a vehicle-to-everything (V2X) communication protocol.

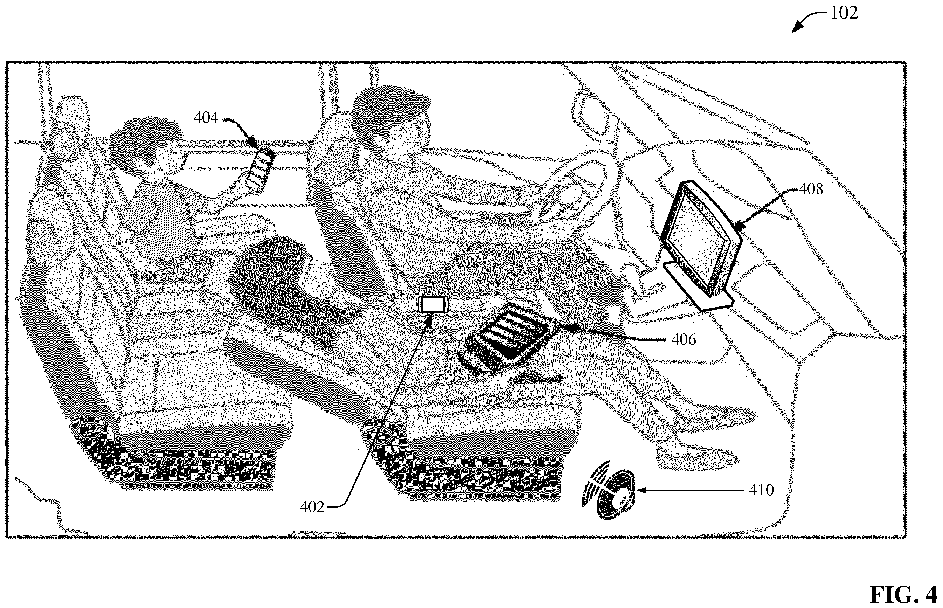

In various embodiments, the warning component 206 can, in response to a determination (e.g., via the warning component 206) that the one or more health metrics of the battery 132 exceed a defined warning threshold, generate a warning, applicable to the determination that the one or more health metrics of the battery 132 exceed the defined warning threshold, to be rendered via a user interface (e.g., via a U.I. component 212). Such a defined warning threshold can comprise, or be based on, a predicted change in the battery health metric if a defined charging scheme is utilized. In this regard, the U.I. component 212 can present a message representative of the warning to a user of the vehicle 102. Such a message can comprise a notification and/or one or more options, configured to be selectable by the user, that can be implemented by the system 100 in order to acknowledge the warning, override the warning (e.g., continue charging at a rate that could damage the battery 132), select a charging scheme from a group of available charging schemes, or other suitable selectable options or inputs. In various embodiments, the communication component 204 can, based on the warning, transmit a message representative of the warning to one or more external devices (e.g., a mobile device 402, mobile device 404, or mobile device 406 associated with a registered user of the vehicle 102). In this regard, see FIG. 4 which depicts an interior of a vehicle 102 herein. In various implementations, the message can comprise a push notification (e.g., via a mobile application of a mobile device 402, 404, or 406) a text message, an email, a phone call, a video message, voicemail, or another suitable message. In various embodiments, message transmitted (e.g., via the communication component 204) can comprise a notification and/or one or more options, configured to be selectable by the user, that can be implemented by the system 100 in order to acknowledge the warning, override the warning (e.g., continue charging at a rate that could damage the battery 132), select a charging scheme from a group of available charging schemes, or other suitable selectable options or inputs. In this regard, one or more of the computer executable components 122 can facilitate a corresponding action based on a selection by the user via the respective mobile device 402, 404, or 406 (e.g., as received via the communication component 204). In various implementations, a user can select an option by tapping on an area of a touch screen of a mobile device 402, 404, or 406 associated with the option (e.g., tapping an icon of a selectable option). In further embodiments, a message herein can be transmitted via an infotainment device 408 of the vehicle 102. In further embodiments, the message can comprise a haptic alert via a steering wheel of the vehicle 102, an audible alert via a speaker 410 of the vehicle 102, or a different type of message, and the user can provide an audible response (e.g., captured via a microphone of the vehicle 102). In various implementations, the message can increase in intensity over a defined period of time (e.g., via haptic vibration or sound) in response to the message not being acknowledged by the user (e.g., via a corresponding mobile device 402, 404, or 406, infotainment device 408, or via another suitable interface). It is noted that, in various embodiments, the message can be transmitted to/from an external device (e.g., a mobile device 402, 404, or 406) and a vehicle 102 via a V2X communication protocol.

In various embodiments, an A.I. component 208 can, based on past health metrics of other batteries, other than the battery 132 (e.g., from vehicles other than the vehicle 102), and past charging schemes, other than the charging scheme (e.g., the instant charging scheme), generate a charging scheme model (e.g., stored in memory 118). In this regard, the charging scheme for charging the battery 132 can be further determined (e.g., via the charging scheme component 202) using the charging scheme model. In further embodiments, the AI. component 208 can modify a charging scheme herein based on past health metrics of the battery 132 and past charging schemes applicable to the battery 132. In this regard, the A.I. component 208 can learn about the battery 132 as it chemically ages and modify charging schemes herein (e.g., via the A.I. component 208 or charging scheme component 202) based on the chemical aging of the battery 132.

In various embodiments, the A.I. component 208 can recommend relatively slower charging rates, for instance, when defined fast charging is not needed. For example, if two hours are available to charge the battery 132 of the vehicle 102 (e.g., user is determined to be shopping and having a meal based on data from a mobile device of the user and/or other suitable defined context data), then the A.I. component 208 can determine an amount of charge expected to be needed (e.g., until the next charging opportunity) and determine a minimal charging rate to achieve a needed level of charge (e.g., until next charging opportunity and/or destination, or as request by a user via a U.I. component 212 or communication component 204). In various embodiments, the charging scheme component 202 utilize such data determined via the A.I. component 208 to determine a corresponding charging scheme herein.

Various embodiments herein can employ artificial-intelligence or machine learning systems and techniques to facilitate learning user behavior, context-based scenarios, preferences, etc. in order to facilitate taking automated action with high degrees of confidence. Utility-based analysis can be utilized to factor benefit of taking an action against cost of taking an incorrect action. Probabilistic or statistical-based analyses can be employed in connection with the foregoing and/or the following.

It is noted that systems and/or associated controllers, servers, or machine learning components herein can comprise artificial intelligence component(s) which can employ an artificial intelligence (A.I.) model and/or machine learning (M.L.) or an M.L. model that can learn to perform the above or below described functions (e.g., via training using historical training data and/or feedback data).

In some embodiments, A.I. component 208 can comprise an A.I. and/or M.L. model that can be trained (e.g., via supervised and/or unsupervised techniques) to perform the above or below-described functions using historical training data comprising various context conditions that correspond to various augmented network optimization operations. In this example, such an A.I. and/or M.L. model can further learn (e.g., via supervised and/or unsupervised techniques) to perform the above or below-described functions using training data comprising feedback data, where such feedback data can be collected and/or stored (e.g., in memory) by the A.I. component 208. In this example, such feedback data can comprise the various instructions described above/below that can be input, for instance, to a system herein, over time in response to observed/stored context-based information.

A.I./M.L. components herein can initiate an operation(s) associated with a based on a defined level of confidence determined using information (e.g., feedback data). For example, based on learning to perform such functions described above using feedback data, performance information, and/or past performance information herein, a A.I. component 208 herein can initiate an operation associated with determining various thresholds herein (e.g., a motion pattern thresholds, input pattern thresholds, similarity thresholds, authentication signal thresholds, audio frequency thresholds, or other suitable thresholds).

In an embodiment, the A.I. component 208 can perform a utility-based analysis that factors cost of initiating the above-described operations versus benefit. In this embodiment, the A.I. component 208 can use one or more additional context conditions to determine various thresholds herein.

To facilitate the above-described functions, a A.I. component 208 herein can perform classifications, correlations, inferences, and/or expressions associated with principles of artificial intelligence. For instance, the A.I. component 208 can employ an automatic classification system and/or an automatic classification. In one example, the A.I. component 208 can employ a probabilistic and/or statistical-based analysis (e.g., factoring into the analysis utilities and costs) to learn and/or generate inferences. The A.I. component 208 can employ any suitable machine-learning based techniques, statistical-based techniques and/or probabilistic-based techniques. For example, the A.I. component 208 can employ expert systems, fuzzy logic, support vector machines (SVMs), Hidden Markov Models (HMMs), greedy search algorithms, rule-based systems, Bayesian models (e.g., Bayesian networks), neural networks, other non-linear training techniques, data fusion, utility-based analytical systems, systems employing Bayesian models, and/or the like. In another example, the A.I. component 208 can perform a set of machine-learning computations. For instance, the A.I. component 208 can perform a set of clustering machine learning computations, a set of logistic regression machine learning computations, a set of decision tree machine learning computations, a set of random forest machine learning computations, a set of regression tree machine learning computations, a set of least square machine learning computations, a set of instance-based machine learning computations, a set of regression machine learning computations, a set of support vector regression machine learning computations, a set of k-means machine learning computations, a set of spectral clustering machine learning computations, a set of rule learning machine learning computations, a set of Bayesian machine learning computations, a set of deep Boltzmann machine computations, a set of deep belief network computations, and/or a set of different machine learning computations.

In another embodiment, the communication component 204 (e.g., in this example, of a vehicle charger 302) can receive (e.g., via the communication component 204) one or more health metrics of a battery 132 of a vehicle 102. In this regard, the vehicle charger 302 can receive the one or more health metrics of the battery 132 of the vehicle 102 from the vehicle 102. The charging scheme component 202 (e.g., in this example, of a vehicle charger 302) can then, based on the one or more health metrics of the battery 132, determine a charging scheme for charging the battery 132 of the vehicle 102. In various embodiments, the battery 132 can comprise a solid-state battery. In this regard, the charging scheme can be further determined (e.g., via the charging scheme component 202) based on a type of the battery 132 being determined (e.g., via the charging scheme component 202) to comprise the solid-state battery. In further embodiments, the battery 132 can comprise a multi-cell battery. In this regard, the charging scheme can be further determined (e.g., via the charging scheme component 202) based on a type of the battery 132 being determined (e.g., via the charging scheme component 202) to comprise the multi-cell battery.

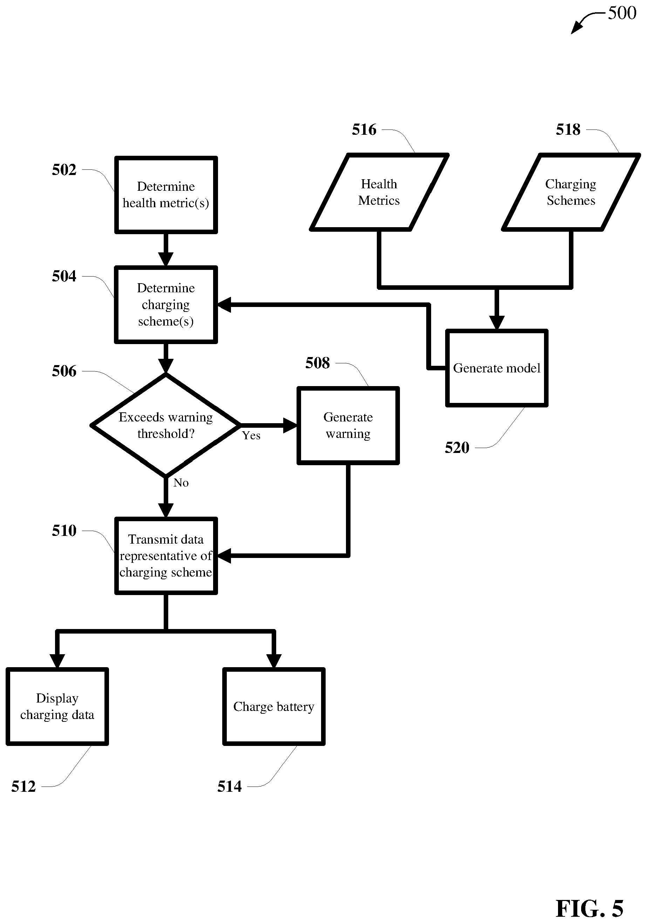

FIG. 5 illustrates a flowchart for a process 500 associated with smart charging in accordance with one or more embodiments described herein. At 502, a charging scheme component 202 and/or onboard vehicle system 104 can be configured to determine and/or monitor one or more battery health metrics (e.g., as previously discussed) of a battery 132 of a vehicle 102. At 504, the charging scheme component 202 can, based on one or more health metrics of the battery 132 of the vehicle 102, determine a charging scheme for charging the battery 132. At 506, if one or more health metrics of the battery exceed a defined warning threshold (e.g., Yes at 506), the process can proceed to 508. At 508, the warning component 206 can generate a warning, applicable to the determination that the one or more health metrics of the battery 132 exceed the defined warning threshold. If at 506, one or more health metrics of the battery do not exceed a defined warning threshold (e.g., No at 506), the process can proceed to 510. At 510, the communication component 204 can transmit data representative of the charging scheme to a vehicle charger 302. At 512, a U.I. component 212 can render, via a user interface of the vehicle 102, information representative of a charging scheme herein and/or a warning herein. At 514, the charging component 210 can facilitate charging of the battery 132 of the vehicle 102 via the vehicle charger 302, for instance, using the charging scheme determined via the charging scheme component 202. In various embodiments, at 520, an A.I. component 208 can, based on past health metrics 516 of other batteries, other than the battery 132, and past charging schemes 518, other than the charging scheme, generate a charging scheme model. In this regard, the charging scheme component 202 can determine the charging scheme for charging the battery 132 using the charging scheme model.

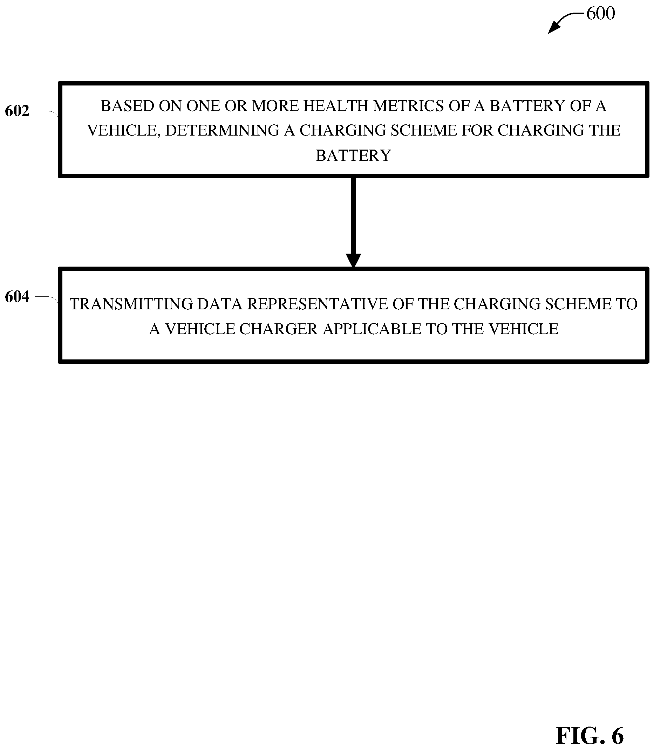

FIG. 6 illustrates a block flow diagram for a process 600 associated with smart charging in accordance with one or more embodiments described herein. At 602, the process 600 can comprise, based on one or more health metrics of a battery (e.g., battery 132) of a vehicle (e.g., vehicle 102), determining (e.g., via a charging scheme component 202) a charging scheme for charging the battery (e.g., battery 132). At 604, the process 600 can comprise transmitting (e.g., via a communication component 204) data representative of the charging scheme to a vehicle charger (e.g., vehicle charger 302) applicable to the vehicle (e.g., vehicle 102).

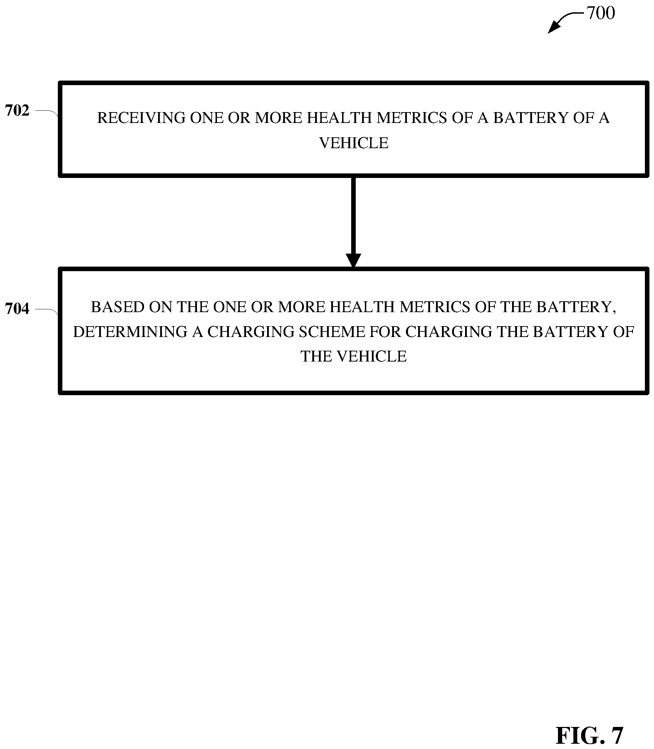

FIG. 7 illustrates a block flow diagram for a process 700 associated with smart charging in accordance with one or more embodiments described herein. At 702, the process 700 can comprise receiving (e.g., via a communication component 204) one or more health metrics of a battery (e.g., battery 132) of a vehicle (e.g., vehicle 102). At 704, the process 700 can comprise, based on the one or more health metrics of the battery (e.g., battery 132), determining (e.g., via a charging scheme component 202) a charging scheme for charging the battery (e.g., battery 132) of the vehicle (e.g., vehicle 102).

Systems described herein can be coupled (e.g., communicatively, electrically, operatively, optically, inductively, acoustically, etc.) to one or more local or remote (e.g., external) systems, sources, and/or devices (e.g., electronic control systems (ECU), classical and/or quantum computing devices, communication devices, etc.). For example, system 100 (or other systems, controllers, processors, etc.) can be coupled (e.g., communicatively, electrically, operatively, optically, etc.) to one or more local or remote (e.g., external) systems, sources, and/or devices using a data cable (e.g., High-Definition Multimedia Interface (HDMI), recommended standard (RS), Ethernet cable, etc.) and/or one or more wired networks described below.

In some embodiments, systems herein can be coupled (e.g., communicatively, electrically, operatively, optically, inductively, acoustically, etc.) to one or more local or remote (e.g., external) systems, sources, and/or devices (e.g., electronic control units (ECU), classical and/or quantum computing devices, communication devices, etc.) via a network. In these embodiments, such a network can comprise one or more wired and/or wireless networks, including, but not limited to, a cellular network, a wide area network (WAN) (e.g., the Internet), and/or a local area network (LAN). For example, system 100 can communicate with one or more local or remote (e.g., external) systems, sources, and/or devices, for instance, computing devices using such a network, which can comprise virtually any desired wired or wireless technology, including but not limited to: powerline ethernet, VHF, UHF, AM, wireless fidelity (Wi-Fi), BLUETOOTH^{®}, fiber optic communications, global system for mobile communications (GSM), universal mobile telecommunications system (UMTS), worldwide interoperability for microwave access (WiMAX), enhanced general packet radio service (enhanced GPRS), third generation partnership project (3GPP) long term evolution (LTE), third generation partnership project 2 (3GPP2) ultra-mobile broadband (UMB), high speed packet access (HSPA), Zigbee and other 802.XX wireless technologies and/or legacy telecommunication technologies, Session Initiation Protocol (SIP), ZIGBEE^{®}, RF4CE protocol, WirelessHART protocol, L-band voice or data information, 6LoWPAN (IPv6 over Low power Wireless Area Networks), Z-Wave, an ANT, an ultra-wideband (UWB) standard protocol, and/or other proprietary and non-proprietary communication protocols. In this example, system 100 can thus include hardware (e.g., a central processing unit (CPU), a transceiver, a decoder, an antenna (e.g., a ultra-wideband (UWB) antenna, a BLUETOOTH^{®} low energy (BLE) antenna, etc.), quantum hardware, a quantum processor, etc.), software (e.g., a set of threads, a set of processes, software in execution, quantum pulse schedule, quantum circuit, quantum gates, etc.), or a combination of hardware and software that facilitates communicating information between a system herein and remote (e.g., external) systems, sources, and/or devices (e.g., computing and/or communication devices such as, for instance, a smart phone, a smart watch, wireless earbuds, etc.).

System herein can comprise one or more computer and/or machine readable, writable, and/or executable components and/or instructions that, when executed by processor (e.g., a processing unit 116 which can comprise a classical processor, a quantum processor, etc.), can facilitate performance of operations defined by such component(s) and/or instruction(s). Further, in numerous embodiments, any component associated with a system herein, as described herein with or without reference to the various figures of the subject disclosure, can comprise one or more computer and/or machine readable, writable, and/or executable components and/or instructions that, when executed by a processor, can facilitate performance of operations defined by such component(s) and/or instruction(s). Consequently, according to numerous embodiments, system herein and/or any components associated therewith as disclosed herein, can employ a processor (e.g., processing unit 116) to execute such computer and/or machine readable, writable, and/or executable component(s) and/or instruction(s) to facilitate performance of one or more operations described herein with reference to system herein and/or any such components associated therewith.

Systems herein can comprise any type of system, device, machine, apparatus, component, and/or instrument that comprises a processor and/or that can communicate with one or more local or remote electronic systems and/or one or more local or remote devices via a wired and/or wireless network. All such embodiments are envisioned. For example, a system (e.g., a system 100 or any other system or device described herein) can comprise a computing device, a general-purpose computer, field-programmable gate array, AI accelerator application-specific integrated circuit, a special-purpose computer, an onboard computing device, a communication device, an onboard communication device, a server device, a quantum computing device (e.g., a quantum computer), a tablet computing device, a handheld device, a server class computing machine and/or database, a laptop computer, a notebook computer, a desktop computer, wearable device, internet of things device, a cell phone, a smart phone, a consumer appliance and/or instrumentation, an industrial and/or commercial device, a digital assistant, a multimedia Internet enabled phone, a multimedia players, and/or another type of device.

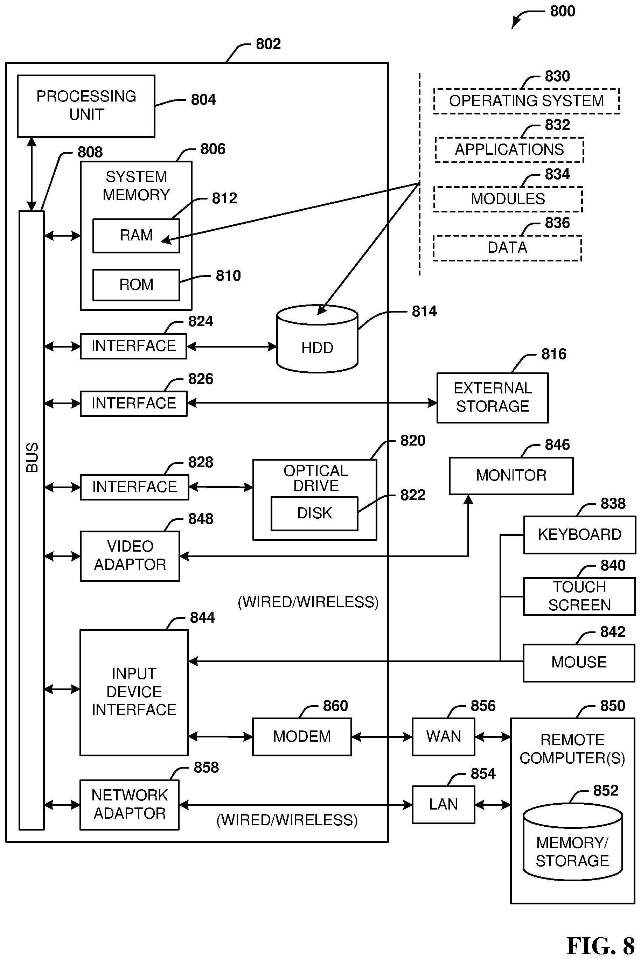

In order to provide additional context for various embodiments described herein, FIG. 8 and the following discussion are intended to provide a brief, general description of a suitable computing environment 800 in which the various embodiments of the embodiment described herein can be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the various methods can be practiced with other computer system configurations, including single-processor or multiprocessor computer systems, minicomputers, mainframe computers, Internet of Things (IoT) devices, distributed computing systems, as well as personal computers (e.g., ruggedized personal computers), field-programmable gate arrays, hand-held computing devices, microprocessor-based or programmable consumer electronics, and the like, each of which can be operatively coupled to one or more associated devices.

The illustrated embodiments of the embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data, or unstructured data.

Computer-readable storage media can include, but are not limited to, random access memory (RAM), read only memory (ROM), electrically erasable programmable read only memory (EEPROM), flash memory or other memory technology, compact disk read only memory (CD ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory, or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries, or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, optic, infrared, and other wireless media.

With reference again to FIG. 8, the example environment 800 for implementing various embodiments of the aspects described herein includes a computer 802, the computer 802 including a processing unit 804, a system memory 806 and a system bus 808. The system bus 808 couples system components including, but not limited to, the system memory 806 to the processing unit 804. The processing unit 804 can be any of various commercially available processors, field-programmable gate array, AI accelerator application-specific integrated circuit, or other suitable processors. Dual microprocessors and other multi-processor architectures can also be employed as the processing unit 804.

The system bus 808 can be any of several types of bus structure that can further interconnect to a memory bus (with or without a memory controller), a peripheral bus, and a local bus using any of a variety of commercially available bus architectures. The system memory 806 includes ROM 810 and RAM 812. A basic input/output system (BIOS) can be stored in a nonvolatile memory such as ROM, erasable programmable read only memory (EPROM), EEPROM, which BIOS contains the basic routines that help to transfer information between elements within the computer 802, such as during startup. The RAM 812 can also include a high-speed RAM such as static RAM for caching data. It is noted that unified Extensible Firmware Interface(s) can be utilized herein.

The computer 802 further includes an internal hard disk drive (HDD) 814 (e.g., EIDE, SATA), one or more external storage devices 816 (e.g., a magnetic floppy disk drive (FDD) 816, a memory stick or flash drive reader, a memory card reader, etc.) and an optical disk drive 820 (e.g., which can read or write from a disk 822 such as a CD-ROM disc, a DVD, a BD, etc.). While the internal HDD 814 is illustrated as located within the computer 802, the internal HDD 814 can also be configured for external use in a suitable chassis (not shown). Additionally, while not shown in environment 800, a solid-state drive (SSD) could be used in addition to, or in place of, an HDD 814. The HDD 814, external storage device(s) 816 and optical disk drive 820 can be connected to the system bus 808 by an HDD interface 824, an external storage interface 826 and an optical drive interface 828, respectively. The interface 824 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 802, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 812, including an operating system 830, one or more application programs 832, other program modules 834 and program data 836. All or portions of the operating system, applications, modules, and/or data can also be cached in the RAM 812. The systems and methods described herein can be implemented utilizing various commercially available operating systems or combinations of operating systems.

Computer 802 can optionally comprise emulation technologies. For example, a hypervisor (not shown) or other intermediary can emulate a hardware environment for operating system 830, and the emulated hardware can optionally be different from the hardware illustrated in FIG. 8. In such an embodiment, operating system 830 can comprise one virtual machine (VM) of multiple VMs hosted at computer 802. Furthermore, operating system 830 can provide runtime environments, such as the Java runtime environment or the .NET framework, for applications 832. Runtime environments are consistent execution environments that allow applications 832 to run on any operating system that includes the runtime environment. Similarly, operating system 830 can support containers, and applications 832 can be in the form of containers, which are lightweight, standalone, executable packages of software that include, e.g., code, runtime, system tools, system libraries and settings for an application.

Further, computer 802 can be enabled with a security module, such as a trusted processing module (TPM). For instance, with a TPM, boot components hash next in time boot components, and wait for a match of results to secured values, before loading a next boot component. This process can take place at any layer in the code execution stack of computer 802, e.g., applied at the application execution level or at the operating system (OS) kernel level, thereby enabling security at any level of code execution.

A user can enter commands and information into the computer 802 through one or more wired/wireless input devices, e.g., a keyboard 838, a touch screen 840, and a pointing device, such as a mouse 842. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 804 through an input device interface 844 that can be coupled to the system bus 808, but can be connected by other interfaces, such as a parallel port, an IEEE 1394 serial port, a game port, a USB port, an IR interface, a BLUETOOTH^{®} interface, etc.

A monitor 846 or other type of display device can be also connected to the system bus 808 via an interface, such as a video adapter 848. In addition to the monitor 846, a computer typically includes other peripheral output devices (not shown), such as speakers, printers, etc.

The computer 802 can operate in a networked environment using logical connections via wired and/or wireless communications to one or more remote computers, such as a remote computer(s) 850. The remote computer(s) 850 can be a workstation, a server computer, a router, a personal computer, portable computer, microprocessor-based entertainment appliance, a peer device or other common network node, and typically includes many or all of the elements described relative to the computer 802, although, for purposes of brevity, only a memory/storage device 852 is illustrated. The logical connections depicted include wired/wireless connectivity to a local area network (LAN) 854 and/or larger networks, e.g., a wide area network (WAN) 856. Such LAN and WAN networking environments are commonplace in offices and companies, and facilitate enterprise-wide computer networks, such as intranets, all of which can connect to a global communications network, e.g., the Internet.

When used in a LAN networking environment, the computer 802 can be connected to the local network 854 through a wired and/or wireless communication network interface or adapter 858. The adapter 858 can facilitate wired or wireless communication to the LAN 854, which can also include a wireless access point (AP) disposed thereon for communicating with the adapter 858 in a wireless mode.

When used in a WAN networking environment, the computer 802 can include a modem 860 or can be connected to a communications server on the WAN 856 via other means for establishing communications over the WAN 856, such as by way of the Internet. The modem 860, which can be internal or external and a wired or wireless device, can be connected to the system bus 808 via the input device interface 844. In a networked environment, program modules depicted relative to the computer 802 or portions thereof, can be stored in the remote memory/storage device 852. It will be appreciated that the network connections shown are example and other means of establishing a communications link between the computers can be used.

When used in either a LAN or WAN networking environment, the computer 802 can access cloud storage systems or other network-based storage systems in addition to, or in place of, external storage devices 816 as described above. Generally, a connection between the computer 802 and a cloud storage system can be established over a LAN 854 or WAN 856 e.g., by the adapter 858 or modem 860, respectively. Upon connecting the computer 802 to an associated cloud storage system, the external storage interface 826 can, with the aid of the adapter 858 and/or modem 860, manage storage provided by the cloud storage system as it would other types of external storage. For instance, the external storage interface 826 can be configured to provide access to cloud storage sources as if those sources were physically connected to the computer 802.

The computer 802 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

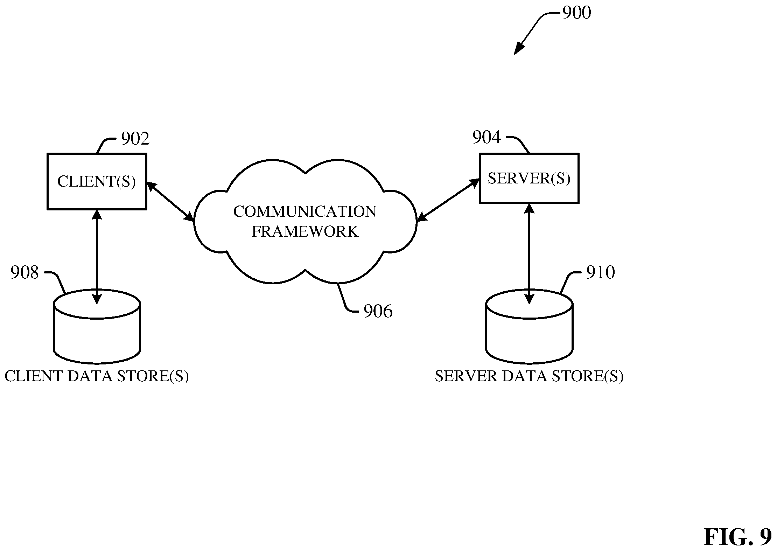

Referring now to FIG. 9, there is illustrated a schematic block diagram of a computing environment 900 in accordance with this specification. The system 900 includes one or more client(s) 902, (e.g., computers, smart phones, tablets, cameras, PDA's). The client(s) 902 can be hardware and/or software (e.g., threads, processes, computing devices). The client(s) 902 can house cookie(s) and/or associated contextual information by employing the specification, for example.

The system 900 also includes one or more server(s) 904. The server(s) 904 can also be hardware or hardware in combination with software (e.g., threads, processes, computing devices). The servers 904 can house threads to perform transformations of media items by employing aspects of this disclosure, for example. One possible communication between a client 902 and a server 904 can be in the form of a data packet adapted to be transmitted between two or more computer processes wherein data packets may include coded analyzed headspaces and/or input. The data packet can include a cookie and/or associated contextual information, for example. The system 900 includes a communication framework 906 (e.g., a global communication network such as the Internet) that can be employed to facilitate communications between the client(s) 902 and the server(s) 904.

Communications can be facilitated via a wired (including optical fiber) and/or wireless technology. The client(s) 902 are operatively connected to one or more client data store(s) 908 that can be employed to store information local to the client(s) 902 (e.g., cookie(s) and/or associated contextual information). Similarly, the server(s) 904 are operatively connected to one or more server data store(s) 910 that can be employed to store information local to the servers 904. Further, the client(s) 902 can be operatively connected to one or more server data store(s) 910.

In one exemplary implementation, a client 902 can transfer an encoded file, (e.g., encoded media item), to server 904. Server 904 can store the file, decode the file, or transmit the file to another client 902. It is noted that a client 902 can also transfer uncompressed file to a server 904 and server 904 can compress the file and/or transform the file in accordance with this disclosure. Likewise, server 904 can encode information and transmit the information via communication framework 906 to one or more clients 902.

The illustrated aspects of the disclosure can also be practiced in distributed computing environments where certain tasks are performed by remote processing devices that are linked through a communications network. In a distributed computing environment, program modules can be located in both local and remote memory storage devices.

The above description includes non-limiting examples of the various embodiments. It is, of course, not possible to describe every conceivable combination of components or methods for purposes of describing the disclosed subject matter, and one skilled in the art can recognize that further combinations and permutations of the various embodiments are possible. The disclosed subject matter is intended to embrace all such alterations, modifications, and variations that fall within the spirit and scope of the appended claims.

With regard to the various functions performed by the above-described components, devices, circuits, systems, etc., the terms (including a reference to a "means") used to describe such components are intended to also include, unless otherwise indicated, any structure(s) which performs the specified function of the described component (e.g., a functional equivalent), even if not structurally equivalent to the disclosed structure. In addition, while a particular feature of the disclosed subject matter may have been disclosed with respect to only one of several implementations, such feature can be combined with one or more other features of the other implementations as may be desired and advantageous for any given or particular application.

The terms "exemplary" and/or "demonstrative" as used herein are intended to mean serving as an example, instance, or illustration. For the avoidance of doubt, the subject matter disclosed herein is not limited by such examples. In addition, any aspect or design described herein as "exemplary" and/or "demonstrative" is not necessarily to be construed as preferred or advantageous over other aspects or designs, nor is it meant to preclude equivalent structures and techniques known to one skilled in the art. Furthermore, to the extent that the terms "includes," "has," "contains," and other similar words are used in either the detailed description or the claims, such terms are intended to be inclusive - in a manner similar to the term "comprising" as an open transition word - without precluding any additional or other elements.

The term "or" as used herein is intended to mean an inclusive "or" rather than an exclusive "or." For example, the phrase "A or B" is intended to include instances of A, B, and both A and B. Additionally, the articles "a" and "an" as used in this application and the appended claims should generally be construed to mean "one or more" unless either otherwise specified or clear from the context to be directed to a singular form.

The term "set" as employed herein excludes the empty set, i.e., the set with no elements therein. Thus, a "set" in the subject disclosure includes one or more elements or entities. Likewise, the term "group" as utilized herein refers to a collection of one or more entities.

The description of illustrated embodiments of the subject disclosure as provided herein, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as one skilled in the art can recognize. In this regard, while the subject matter has been described herein in connection with various embodiments and corresponding drawings, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

Further aspects of the invention are provided by the subject matter of the following clauses:
1. A vehicle, comprising:
   a memory that stores computer executable components; and
   a processor that executes the computer executable components stored in the memory, wherein the computer executable components comprise:
      a charging scheme component that, based on one or more health metrics of a battery of the vehicle, determines a charging scheme for charging the battery; and
      a communication component that transmits data representative of the charging scheme to a vehicle charger.
2. The vehicle of any preceding clause, wherein the one or more health metrics comprise a current temperature of the battery.
3. The vehicle of any preceding clause, wherein the one or more health metrics comprise a state of health metric of the battery.
4. The vehicle of any preceding clause, wherein the one or more health metrics comprise a quantity of times that the battery has been exposed to a charging rate that exceeds a defined charging rate threshold.
5. The vehicle of any preceding clause, wherein the one or more health metrics comprise a cumulative duration of time that the battery has been exposed to a charging rate that exceeds a defined charging rate threshold.
6. The vehicle of any preceding clause, wherein the charging scheme for charging the battery is determined based on a defined amount of time available to charge the battery.
7. The vehicle of any preceding clause, wherein the communication component that transmits the data representative of the charging scheme to the vehicle charger via a wireless connection.
8. The vehicle of any preceding clause, wherein the communication component that transmits the data representative of the charging scheme to the vehicle charger via a charging cable connected to the vehicle and to the vehicle charger.
9. The vehicle of any preceding clause, wherein the charging scheme comprises a group of charging rates configured to be selectively utilized during charging of the battery to prevent a temperature of the battery from exceeding a defined temperature threshold.
10. The vehicle of any preceding clause, wherein the computer executable components further comprise:
   a warning component that, in response to a determination that the one or more health metrics of the battery exceed a defined warning threshold, generates a warning, applicable to the determination that the one or more health metrics of the battery exceed the defined warning threshold, to be rendered via a user interface.
11. The vehicle of any preceding clause, wherein the computer executable components further comprise:
   an artificial intelligence component that, based on past health metrics of other batteries, other than the battery, and past charging schemes, other than the charging scheme, generates a charging scheme model, wherein the charging scheme for charging the battery is determined using the charging scheme model.
12. The vehicle of any preceding clause, wherein the artificial intelligence component modifies the charging scheme based on past health metrics of the battery and past charging schemes applicable to the battery.
13. The vehicle of clause 1 above with any set of combinations of the vehicles 2-12 above.
14. A vehicle charger, comprising:
   a memory that stores computer executable components; and
   a processor that executes the computer executable components stored in the memory, wherein the computer executable components comprise:
      a communication component that receives one or more health metrics of a battery of a vehicle; and
      a charging scheme component that, based on the one or more health metrics of the battery, determines a charging scheme for charging the battery of the vehicle.
15. The vehicle charger of any preceding clause, wherein the battery comprises a solid-state battery, and wherein the charging scheme is further determined based on a type of the battery being determined to comprise the solid-state battery.
16. The vehicle charger of any preceding clause, wherein the battery comprises a multi-cell battery, and wherein the charging scheme is further determined based on a type of the battery being determined to comprise the multi-cell battery.
17. The vehicle charger of any preceding clause, wherein the charging scheme comprises a group of charging rates configured to be selectively utilized during charging of the battery to prevent a temperature of the battery from exceeding a defined temperature threshold.
18. The vehicle charger of clause 14 above with any set of combinations of the vehicle chargers 15-17 above.
19. A non-transitory machine-readable medium, comprising executable instructions that, when executed by a processor, facilitate performance of operations, comprising:
   based on one or more health metrics of a battery of a vehicle, determining a charging scheme for charging the battery; and
   transmitting data representative of the charging scheme to a vehicle charger applicable to the vehicle.
20. The non-transitory machine-readable medium of any preceding clause, wherein the one or more health metrics comprise a quantity of times that the battery has been exposed to a charging rate that exceeds a defined charging rate threshold.
21. The non-transitory machine-readable medium of any preceding clause, wherein the one or more health metrics comprise a cumulative duration of time that the battery has been exposed to a charging rate that exceeds a defined charging rate threshold.
22. The non-transitory machine-readable medium of any preceding clause, wherein the charging scheme for charging the battery is determined based on a defined amount of time available to charge the battery.
23. The non-transitory machine-readable medium of clause 19 above with any set of combinations of the non-transitory machine-readable mediums 20-22 above.

## Claims

1. A vehicle, comprising:
a memory that stores computer executable components; and
a processor that executes the computer executable components stored in the memory, wherein the computer executable components comprise:
a charging scheme component that, based on one or more health metrics of a battery of the vehicle, determines a charging scheme for charging the battery; and
a communication component that transmits data representative of the charging scheme to a vehicle charger.

2. The vehicle of claim 1, wherein the one or more health metrics comprise a current temperature of the battery.

3. The vehicle of claim 1, wherein the one or more health metrics comprise a state of health metric of the battery.

4. The vehicle of claim 1, wherein the one or more health metrics comprise a quantity of times that the battery has been exposed to a charging rate that exceeds a defined charging rate threshold.

5. The vehicle of claim 1, wherein the one or more health metrics comprise a cumulative duration of time that the battery has been exposed to a charging rate that exceeds a defined charging rate threshold.

6. The vehicle of claim 1, wherein the charging scheme for charging the battery is determined based on a defined amount of time available to charge the battery.

7. The vehicle of claim 1, wherein the communication component transmits the data representative of the charging scheme to the vehicle charger via a wireless connection and/or via a charging cable connected to the vehicle and to the vehicle charger.

8. The vehicle of claim 1, wherein the charging scheme comprises a group of charging rates configured to be selectively utilized during charging of the battery to prevent a temperature of the battery from exceeding a defined temperature threshold.

9. The vehicle of claim 1, wherein the computer executable components further comprise:
a warning component that, in response to a determination that the one or more health metrics of the battery exceed a defined warning threshold, generates a warning, applicable to the determination that the one or more health metrics of the battery exceed the defined warning threshold, to be rendered via a user interface.

10. The vehicle of claim 1, wherein the computer executable components further comprise:
an artificial intelligence component that, based on past health metrics of other batteries, other than the battery, and past charging schemes, other than the charging scheme, generates a charging scheme model, wherein the charging scheme for charging the battery is determined using the charging scheme model.

11. The vehicle of claim 10, wherein the artificial intelligence component modifies the charging scheme based on past health metrics of the battery and past charging schemes applicable to the battery.

12. A vehicle charger, comprising:
a memory that stores computer executable components; and
a processor that executes the computer executable components stored in the memory, wherein the computer executable components comprise:
a communication component that receives one or more health metrics of a battery of a vehicle; and
a charging scheme component that, based on the one or more health metrics of the battery, determines a charging scheme for charging the battery of the vehicle.

13. The vehicle charger of claim 12, wherein the battery comprises a solid-state battery, and wherein the charging scheme is further determined based on a type of the battery being determined to comprise the solid-state battery.

14. The vehicle charger of claim 12, wherein the battery comprises a multi-cell battery, and wherein the charging scheme is further determined based on a type of the battery being determined to comprise the multi-cell battery.

15. A non-transitory machine-readable medium, comprising executable instructions that, when executed by a processor, facilitate performance of operations, comprising:
based on one or more health metrics of a battery of a vehicle, determining a charging scheme for charging the battery; and
transmitting data representative of the charging scheme to a vehicle charger applicable to the vehicle.
